# EUROPEAN PATENT APPLICATION

(11) **EP 4 753 253 A1**
(43) Date of publication of application: **03.06.2026**
(21) Application number: 23946705.3
(22) Date of filing: 26.07.2023
(51) Int. Cl.: H04N 7/18

(54) **MONITORING DEVICE**

(71) Applicant: Optex Co., Ltd., Otsu-shi, Shiga 520-0101 (JP)
(72) Inventor: KAWAHATA, Yasutaka, Otsu-shi, Shiga 520-0101 (JP)
(74) Representative: Müller Hoffmann & Partner
(86) International application number: PCT/JP2023/027439
(87) International publication number: WO 2025/022623

(57) **Abstract**

A monitoring device includes: a sensor module configured to emit light or radio waves to a monitoring region that is preset and detect the light or the radio waves reflected and returned from the monitoring region, to detect one or more objects that has intruded into the monitoring region; a camera module including a dark field light source that is for enabling imaging of the monitoring region in a dark field, and an imaging means configured to image the object irradiated with illumination light from the dark field light source; and an imaging scanning means capable of scanning the illumination light along the monitoring region.

## Description

### Technical Field

The present invention relates to a monitoring device used for crime prevention.

### Background Art

As described in Patent Literature 1, there is a conventional monitoring device including an infrared sensor that detects an intruder into a monitoring region and an image sensor that is for capturing an image of the detected intruder.

This image sensor uses an infrared light source that emits infrared light to the monitoring region so as to be able to image the monitoring region even at nighttime.

However, in such a monitoring device, in order to be able to emit infrared light for imaging regardless of a position of the intruder in the monitoring region, it is necessary to mount a very large number of infrared light sources in order to emit infrared light in various directions.

As a result, a cost and a size of the device are increased, and it may be practically difficult to mount a sufficient number of infrared light sources particularly in a case where the monitoring region is a long range.

### Citation List

### Patent Literature

Patent Literature 1: JP 2000-341675 A

### Summary of Invention

### Technical Problem

Therefore, the present invention has been made to solve the above problems, and a main object thereof is to enable reliable imaging of an intruder into a monitoring region regardless of a position of the intruder, without increasing the number of dark field light sources for enabling imaging in a dark field.

### Solution to Problem

That is, a monitoring device according to the present invention includes: a sensor module configured to emit light or radio waves to a monitoring region that is preset and detect the light or the radio waves reflected and returned from the monitoring region, to detect one or more objects that has intruded into the monitoring region; a camera module including a dark field light source that is for enabling imaging of the monitoring region in a dark field, and an imaging means configured to image the object irradiated with illumination light from the dark field light source; and an imaging scanning means capable of scanning the illumination light along the monitoring region.

According to the monitoring device configured as described above, since the imaging scanning means capable of scanning the illumination light emitted from the dark field light source along the monitoring region is provided, it is not necessary to arrange the dark field light source in various directions of the monitoring region, and it is possible to reliably image an intruder into the monitoring region regardless of a position of the intruder, without increasing the number of mounted light sources.

The illumination light from the dark field light source is preferably scanned by the imaging scanning means, to be emitted only to a detection region that is a part of the monitoring region and in which one or more objects has been detected by the sensor module.

Such a configuration can suppress power consumption due to irradiation with illumination light.

Specific modes of the sensor module include a LiDAR sensor and a radar sensor

The sensor module preferably includes a sensor scanning means configured to scan laser light along the monitoring region, and at least some components constituting the sensor scanning means are preferably used also for the imaging scanning means.

With such a configuration, the number of components can be reduced, and downsizing and cost reduction of the device can be achieved.

As an implementation mode for reducing the number of components, an implementation mode can be adopted in which the sensor scanning means includes: a laser light mirror configured to reflect the laser light; a rotation shaft connected to the laser light mirror; and a motor connected to the rotation shaft, the imaging scanning means includes an illumination light mirror configured to reflect the illumination light, and the rotation shaft is connected to the illumination light mirror.

In this case, since the rotation shaft and the motor are used for both means, the number of components can be reduced accordingly.

As another implementation mode for reducing the number of components, an implementation mode can be adopted in which the sensor scanning means includes: a mirror configured to reflect the laser light; a rotation shaft connected to the mirror; and a motor connected to the rotation shaft, and the mirror is a double-sided mirror that is also used for the imaging scanning means, and reflects the illumination light on a back surface of a reflection surface that reflects the laser light.

In this case, since the rotation shaft, the motor, and the mirror are used for both means, the number of components can be reduced accordingly.

The camera module preferably includes a plurality of the dark field light sources, and the imaging scanning means is preferably capable of scanning the illumination light emitted from each of the plurality of dark field light sources along the monitoring region.

In this case, since the plurality of dark field light sources are provided, an amount of the illumination light with which one or more objects having intruded into the monitoring region is irradiated can be increased, and the intruder can be more clearly imaged.

The illumination light emitted from the dark field light source is preferably pulsed light.

As a result, it is possible to suppress power consumption due to irradiation with illumination light.

Preferably, a visible light source configured to emit visible light to the monitoring region is further provided, and the object detected by the sensor module is irradiated with the visible light from the visible light source.

As a result, by irradiating an intruder into the monitoring region with visible light, the intruder can be intimidated.

### Advantageous Effects of Invention

According to the present invention configured as described above, it is possible to reliably image an intruder into the monitoring region regardless of a position of the intruder, without increasing the number of dark field light sources for enabling imaging in a dark field.

### Brief Description of Drawings

FIG. 1 is a schematic diagram illustrating a configuration of a monitoring device according to an embodiment of the present invention.
FIG. 2 is a schematic diagram illustrating a monitoring region and an imaging region according to the embodiment.
FIG. 3 is a functional block diagram illustrating functions of a control module according to the embodiment.
FIG. 4 is a schematic diagram illustrating configurations of a sensor scanning means and an imaging scanning means according to the embodiment.
FIG. 5 is a schematic diagram illustrating configurations of a sensor scanning means and an imaging scanning means according to another embodiment.
FIG. 6 is a schematic diagram illustrating a configuration of a dark field light source of another embodiment.
FIG. 7 is a schematic diagram illustrating configurations of a sensor scanning means and an imaging scanning means according to another embodiment.
FIG. 8 is a schematic diagram illustrating configurations of a sensor scanning means and an imaging scanning means according to another embodiment.

### Description of Embodiment

A monitoring device 100 according to an embodiment of the present invention will be described with reference to the drawings. However, the present invention is not limited by the following description.

### [Overall configuration of monitoring device 100]

The monitoring device 100 of the present embodiment is used for security of various facilities such as business facilities such as offices, commercial facilities, airports, and stations, for example, and detects an intruder into a monitoring region X that is preset indoors or outdoors, and acquires an image of the intruder.

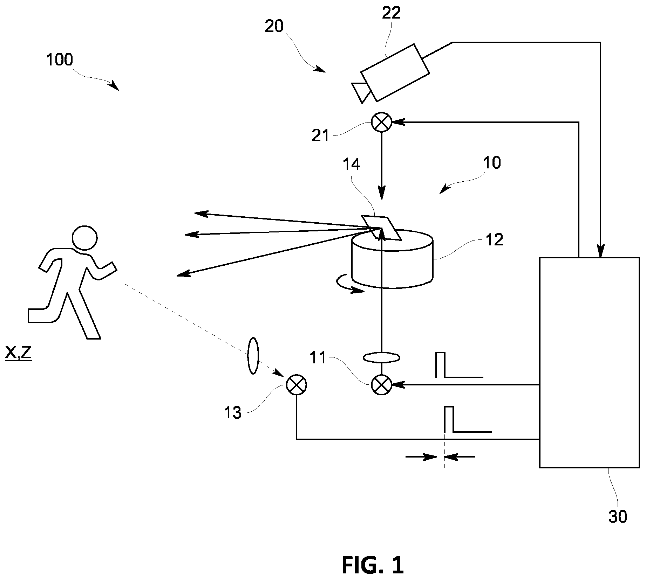

Specifically, as illustrated in FIG. 1, the monitoring device 100 includes a sensor module 10, a camera module 20, and a control module 30.

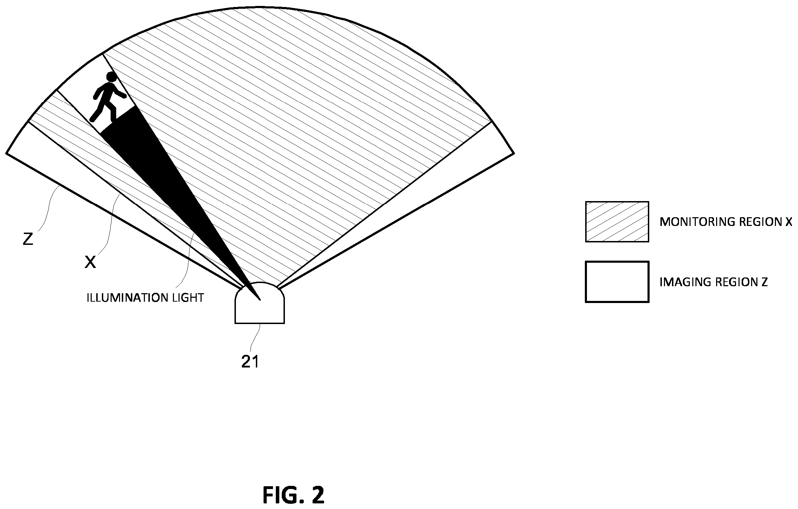

As illustrated in FIGS. 1 and 2, the sensor module 10 is for detecting one or more objects present in the preset monitoring region X, and specifically, detecting one or more objects that has intruded into the monitoring region X.

The sensor module 10 emits light or radio waves to the monitoring region X, and detects the light or the radio waves reflected by one or more objects having intruded into the monitoring region X.

The sensor module 10 of the present embodiment is a LiDAR sensor, and specifically, as illustrated in FIG. 1, includes a light source 11, a sensor scanning means 12 that scans light emitted from the light source 11, and a photodetector 13 that receives reflected light reflected by one or more objects located in the monitoring region X.

As illustrated in FIGS. 1 and 2, the light source 11 emits light that is to be scanned along a two-dimensional plane set as the monitoring region X. The light source 11 of the present embodiment is a laser light source that emits laser light, and specifically, emits a pulse of laser light.

As illustrated in FIGS. 1 and 2, the sensor scanning means 12 scans the laser light emitted from the light source 11 along the monitoring region X. As illustrated in FIG. 1, the sensor scanning means 12 of the present embodiment includes a laser light mirror 14 that reflects the laser light emitted from the light source 11, a rotation shaft 15 connected to the laser light mirror 14, and a power source 16 such as a motor connected to the rotation shaft 15.

More specifically, the laser light mirror 14 is provided in an orientation inclined with respect to the laser light emitted from the light source 11, and the laser light is scanned along the monitoring region X by rotating the laser light mirror 14 around the rotation shaft 15.

Note that the sensor scanning means 12 may rotate the light source 11 around a predetermined rotation shaft to scan the light emitted from the light source 11 along the monitoring region X, and the sensor scanning means 12 in this case may not include the laser light mirror 14. Furthermore, the sensor scanning means 12 may be configured to scan the laser light by using a MEMS mirror.

As illustrated in FIG. 1, the photodetector 13 detects reflected light reflected by one or more objects present in the monitoring region X, and outputs a detection signal indicating the detection to the control module 30 described later.

The photodetector 13 according to the present embodiment receives the laser light, and is, for example, a photodiode such as an avalanche photodiode (APD). However, the photodetector 13 is not necessarily limited thereto, and may be appropriately changed according to a type of the light source 11, for example. Note that the photodetector 13 may be configured to be able to detect an angle by using a plurality of reception antennas and detecting a phase difference between the individual antennas.

In order to prevent an existing object such as a building or a tree within the monitoring region X from being detected as one or more objects having intruded, the sensor module 10 described above is made to be able to determine that one or more objects has intruded into the monitoring region X by acquiring in advance a detection signal output from the photodetector 13 at a normal time when there is no intrusion of the object, and comparing normal-time information indicated by the detection signal at the normal time with monitoring information indicated by detection signals sequentially output from the photodetector 13 at the time of monitoring.

As illustrated in FIGS. 1 and 2, the camera module 20 is for imaging one or more objects present in a preset imaging region Z, and specifically imaging one or more objects that has intruded into the monitoring region X described above. Note that, as illustrated in FIG. 2, the imaging region Z of the present embodiment is set slightly wider than the monitoring region X in the present embodiment. Note that the imaging region Z may be set slightly narrower than the monitoring region X, or may be set as a region matching the monitoring region X.

The camera module 20 continuously images the monitoring region X regardless of whether one or more objects has been detected by the sensor module 10 described above. In other words, the camera module 20 acquires a moving image of the monitoring region X, and an exposure time at each imaging timing is maintained at a constant time.

However, the camera module 20 may be, for example, a camera module that acquires a still image of the monitoring region X at a timing when the sensor module 10 detects one or more objects that has intruded, or may be a camera module that acquires a moving image from the timing until a predetermined time elapses.

The camera module 20 is configured to be able to image one or more objects even in a dark field at nighttime and the like. Specifically, as illustrated in FIGS. 1 and 2, the camera module includes a dark field light source 21 that is for enabling imaging of the monitoring region X in a dark field, and an imaging means 22 that images one or more objects irradiated with the illumination light from the dark field light source 21. As illustrated in FIG. 2, the dark field light source 21 emits light at a light projection angle (for example, about 5°) smaller than a viewing angle of the imaging means 22 in plan view from above. Note that, the dark field light source 21 here is an infrared light source such as an LED that emits infrared light to the monitoring region X as the illumination light, but is not necessarily limited thereto, and may emit visible light or the like as the illumination light, for example.

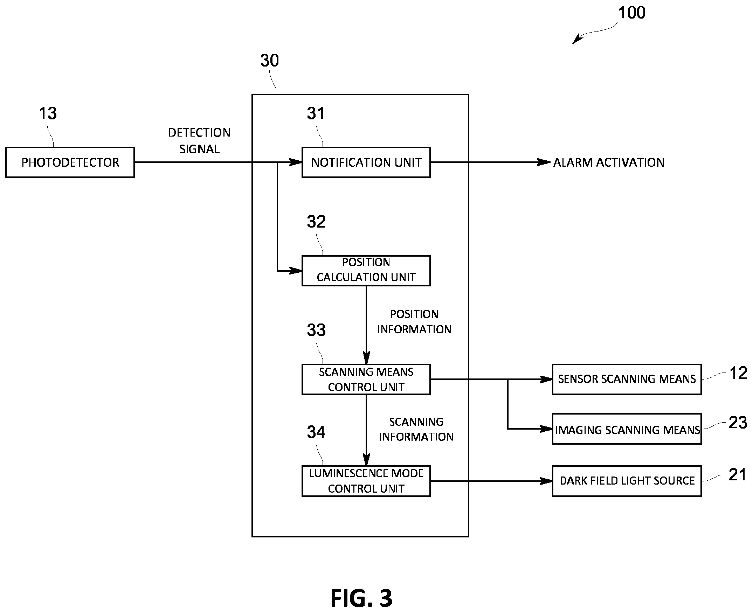

The control module 30 controls the sensor module 10 and the camera module 20, and physically includes a CPU, a memory, and the like. The control module 30 functionally exerts functions at least as a notification unit 31 and a position calculation unit 32 as illustrated in FIG. 3 by operating the CPU and peripheral devices thereof in accordance with a program for the monitoring device stored in the memory.

As illustrated in FIG. 3, the notification unit 31 acquires a detection signal from the sensor module 10 (specifically, the photodetector 13), and notifies a user that one or more objects has intruded into the monitoring region X.

Specifically, the notification unit 31 is configured to determine whether or not one or more objects has intruded into the monitoring region X by comparing the normal-time information stored in the memory with the monitoring information indicated by detection signals sequentially transmitted from the sensor module 10.

Furthermore, the notification unit 31 may be configured to transmit a moving image or a still image obtained by the camera module 20 to the user, when notifying that the object has intruded into the monitoring region X.

As illustrated in FIG. 3, the position calculation unit 32 acquires a detection signal from the sensor module 10, and calculates position information indicating a detection position of the object on the basis of the detection signal.

This position information is information indicating coordinates as the detection position of the object, and is information including a detection distance, which is a distance from the sensor module 10 to the object, and a detection angle of the object with respect to the sensor module 10.

The position calculation unit 32 of the present embodiment is physically configured using a time of flight (TOF) circuit or the like, and calculates the distance to the detected object by measuring a time from when the light source 11 emits a pulse of the laser light to when the laser light is reflected by one or more objects and received, and converting the measured time into a distance.

In addition, the position calculation unit 32 of the present embodiment acquires the detection angle of the detected object on the basis of an angle of the laser light received by the photodetector 13.

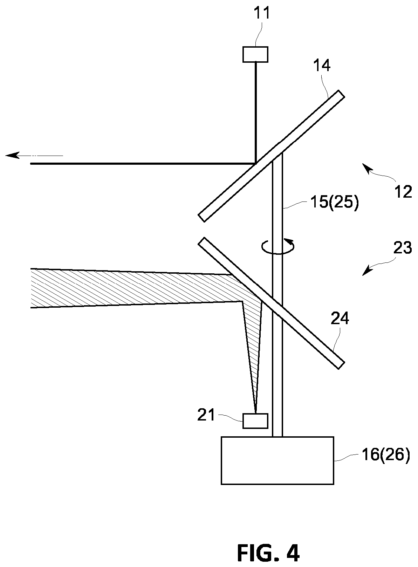

Then, in the above-described configuration, as illustrated in FIG. 4, the monitoring device 100 of the present embodiment further includes an imaging scanning means 23 capable of scanning the illumination light from the dark field light source 21 along the monitoring region X. Note that, in FIG. 1, the imaging scanning means 23 is omitted for convenience of description.

Specifically, as illustrated in FIG. 4, the imaging scanning means 23 includes an illumination light mirror 24 that reflects the illumination light emitted from the dark field light source 21, a rotation shaft 25 connected to the illumination light mirror 24, and a power source 26 such as a motor connected to the rotation shaft 25.

In this embodiment, at least some components constituting the above-described sensor scanning means 12 are also used for the imaging scanning means 23.

More specifically, the rotation shaft 15 connected to the laser light mirror 14 is also used as the rotation shaft 25 connected to the illumination light mirror 24, and the motor connected to these rotation shafts 15 (25) is used for both the sensor scanning means 12 and the imaging scanning means 23.

In the above-described configuration, the dark field light source 21 is arranged to be opposed to the laser light source 11 that emits the laser light, and the illumination light mirror 24 and the laser light mirror 14 are arranged between the light sources 11 and 21. In other words, the dark field light source 21, the illumination light mirror 24, the laser light mirror 14, and the laser light source 11 are arranged in this order along the rotation shaft 15 (25).

In the present embodiment, the illumination light is emitted from the dark field light source 21 along the rotation shaft 15 (25) and is reflected by the illumination light mirror 24 in a direction orthogonal to the rotation shaft 15 (25). The laser light is emitted from the laser light source 11 along the rotation shaft 15 (25) and is reflected by the laser light mirror 14 in a direction orthogonal to the rotation shaft 15 (25).

In such a configuration, the illumination light mirror 24 and the laser light mirror 14 are provided in orientations in which the illumination light and the laser light emitted at the same timing are reflected by the illumination light mirror 24 and the laser light mirror 14, respectively, and are directed in the same direction.

Thus, the control module 30 of the present embodiment further exhibits functions as a scanning means control unit 33 and a luminescence mode control unit 34.

The scanning means control unit 33 controls the sensor scanning means 12 to scan the laser light emitted from the light source 11 along the monitoring region X, at the time of normal monitoring in which no intrusion of one or more objects is detected in the monitoring region X. Whereas, at the time of intrusion detection when intrusion of one or more objects is detected in the monitoring region X, the scanning means control unit 33 controls the imaging scanning means 23 such that the illumination light emitted from the dark field light source 21 is directed to the object that has intruded into the monitoring region X.

At the time of normal monitoring, the scanning means control unit 33 controls the sensor scanning means 12 to drive the power source 16 (26) to rotate the laser light mirror 14 around the rotation shaft 15 (25), thereby causing reciprocating scanning of the laser light in the monitoring region X.

At the time of intrusion detection, the scanning means control unit 33 acquires the position information calculated by the position calculation unit 32 described above, and controls the imaging scanning means 23 on the basis of the detection angle included in the position information. More specifically, the scanning means control unit 33 first specifies a region (detection region) in which the object has been detected by the sensor module 10 in the monitoring region X on the basis of the acquired detection angle. Then, the scanning means control unit 33 drives the power source 16 (26) to rotate the illumination light mirror 24 around the rotation shaft 15 (25), to cause the illumination light emitted from the dark field light source 21 to be directed only to the specified detection region. Note that "causing the illumination light to be directed (or emitted) only to the detection region" means that the illumination light is emitted only to the specified detection region in plan view from above. That is, the sensor module 10 of the present embodiment is configured to scan the laser light along a two-dimensional plane parallel to a horizontal plane. This means that the illumination light of the dark field light source 21 may be emitted not only along the two-dimensional plane but also to a region including an upper side and a lower side of the two-dimensional plane, as long as the region is within the detection region in plan view from above. In other words, it is not excluded that the illumination light is emitted not only to the two-dimensional planar detection region of the sensor module 10 but also to peripheral regions above and below the two-dimensional planar detection region.

The luminescence mode control unit 34 controls the dark field light source 21 to control a luminescence mode of the illumination light emitted from the dark field light source 21. Note that, the luminescence mode includes an intensity of the illumination light, a luminescence time, a blinking cycle, or the like. For example, the luminescence mode control unit 34 may cause the dark field light source 21 to produce light a plurality of times in accordance with a detection target. Furthermore, in a case where an area of the detection target is larger than an area of the illumination light, the luminescence mode control unit 34 may cause the dark field light source 21 to produce light a plurality of times in accordance with an imaging size of the detection target.

The luminescence mode control unit 34 of the present embodiment is configured to turn off the dark field light source 21 at the time of normal monitoring and to cause the dark field light source 21 to produce light only at the time of intrusion detection. Here, the luminescence mode control unit 34 acquires the scanning information from the scanning means control unit 33, and produces the illumination light only in a state where the illumination light emitted from the dark field light source 21 is directed to the detection region. Here, the luminescence mode control unit 34 controls the dark field light source 21 to emit pulsed light as the illumination light for a certain period of time. Note that, without limiting to this, the luminescence mode control unit 34 may produce the illumination light from a timing at which intrusion of one or more objects into the monitoring region X is detected, or may produce the illumination light after a predetermined time has elapsed from the timing at which the intrusion of the object into the monitoring region X is detected.

Note that, in the present embodiment, since the illumination light mirror 24 and the laser light mirror 14 are provided in orientations in which the illumination light and the laser light emitted at the same timing are reflected by the illumination light mirror 24 and the laser light mirror 14, respectively, and are directed in the same direction, the illumination light emitted from the dark field light source 21 is directed to the detection region at the timing when intrusion of one or more objects into the monitoring region X is detected. Therefore, upon detecting intrusion of one or more objects into the monitoring region X, the monitoring device 100 of the present embodiment immediately emits the illumination light from the dark field light source 21 without rotating the illumination light mirror 24 with the scanning means control unit 33.

### [Operation and effect of monitoring device 100 of present embodiment]

According to the monitoring device 100 configured as described above, since the imaging scanning means 23 capable of scanning the illumination light emitted from the dark field light source 21 along the monitoring region is provided, it is not necessary to arrange the dark field light source in various directions of the monitoring region X, and it is possible to reliably image an intruder into the monitoring region X regardless of a position of the intruder, without increasing the number of mounted light sources.

In addition, since the illumination light from the dark field light source 21 is scanned by the imaging scanning means 23, and is emitted only to the detection region that is a part of the monitoring region X and in which the object has been detected by the sensor module 10, it is possible to suppress power consumption due to irradiation with the illumination light.

Furthermore, since the rotation shaft 15 (25) and the power source 16 (26) are shared between the sensor scanning means 12 and the imaging scanning means 23, the number of components can be reduced, and downsizing and cost reduction of the device can be achieved.

In addition, since the illumination light emitted from the dark field light source 21 is pulsed light, power consumption due to irradiation with the illumination light can be suppressed.

### [Other embodiments]

Note that the present invention is not limited to the embodiment.

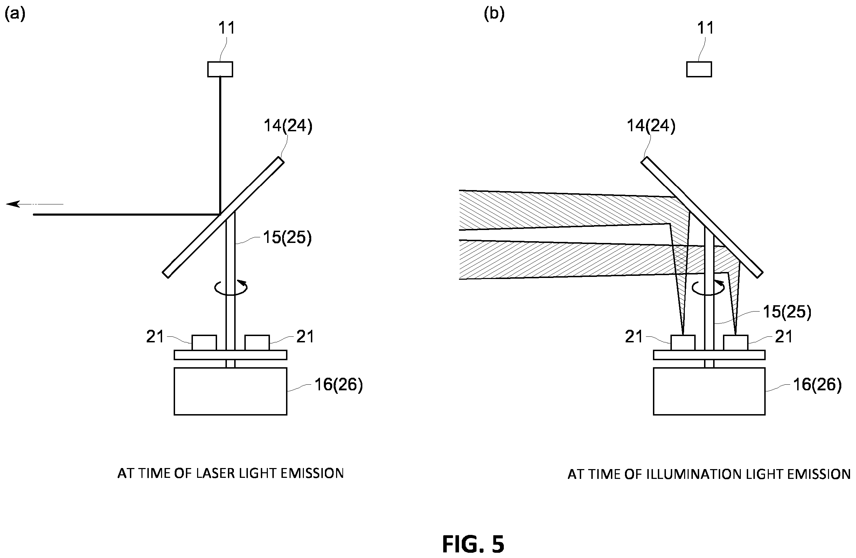

For example, in another embodiment, a mirror that reflects light from each light source may be shared between the sensor scanning means 12 and the imaging scanning means 23. For example, as illustrated in FIG. 5, the laser light mirror 14 may include a double-sided mirror, and may be configured to reflect the illumination light emitted from the dark field light source 21 on a back surface of a reflection surface that reflects the laser light emitted from the laser light source 11. By doing this way, since the rotation shaft 15 (25), the motor 16 (26), and the mirror 14 (24) are used for both means, the number of components can be reduced accordingly.

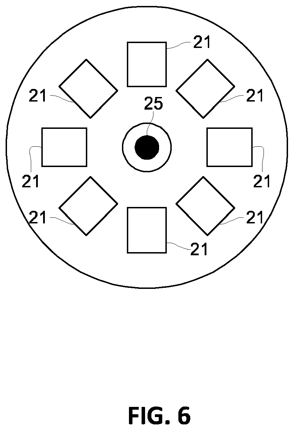

Furthermore, in another embodiment, as illustrated in FIGS. 5 and 6, the camera module 20 may include a plurality of dark field light sources 21 arranged with optical axes aligned. In this case, the imaging scanning means 23 is preferably configured to be able to scan illumination light emitted from each of the plurality of dark field light sources 21 along the monitoring region X. By doing this way, since the plurality of dark field light sources 21 are provided, an amount of the illumination light with which one or more objects having intruded into the monitoring region X is irradiated can be increased, and an intruder can be imaged more clearly.

Furthermore, in another embodiment, the luminescence mode control unit 34 may be configured to adjust a height and an angle of the illumination light emitted from the camera module 20 in accordance with a position or a size of one or more objects detected in the monitoring region X. For example, in a case where the camera module 20 includes a plurality of dark field light sources 21 having different heights or emission angles of the illumination light emitted to the monitoring region X, only some of the plurality of dark field light sources 21 may be turned on in accordance with the position or the size of the detected object. In this way, it is possible to reliably image the object detected in the monitoring region X, while suppressing power consumption due to irradiation with the illumination light.

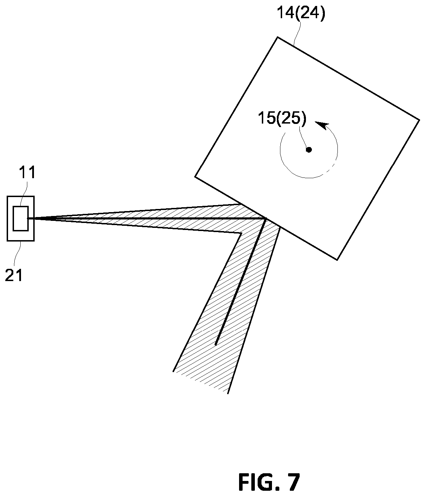

Furthermore, in another embodiment, the laser light mirror 14 and the illumination light mirror 24 respectively constituting the scanning means 12 and 23 may include a multifaceted mirror such as a polygon mirror having a plurality of mirror surfaces (for example, four surfaces or six surfaces). In this case, the multifaceted mirror 24 may be shared between the sensor scanning means 12 and the imaging scanning means 23. In this case, the multifaceted mirror 24 may be arranged such that each mirror surface rotates around the rotation shaft 15 (25), and the laser light source 11 and the dark field light source 21 may be arranged to emit light orthogonally to the rotation shaft 15 (25) toward the multifaceted mirror 24. The laser light source 11 and the dark field light source 21 may be arranged to face the same direction as illustrated in FIG. 7, or may be arranged to face each other with the multifaceted mirror 24 interposed therebetween as illustrated in FIG. 8.

In still another embodiment, the monitoring device 100 may further include a visible light source configured to emit visible light to the monitoring region X, and may be configured to irradiate one or more objects detected by the sensor module 10 with the visible light from the visible light source. In this case, the monitoring device 100 may include a visible light scanning means capable of scanning the visible light from the visible light source along a visible region, and the visible light may be emitted to the detection region where one or more objects is detected by the sensor module by scanning the visible light with the visible light scanning means. In this case, it is possible to intimidate an intruder by irradiating the intruder into the monitoring region X with the visible light.

Further, in the embodiment, the camera module 20 is configured to turn off the dark field light source 21 at the time of normal monitoring and to cause the dark field light source 21 to produce light only at the time of intrusion detection, but the present invention is not limited thereto. In another embodiment, the camera module 20 may cause the dark field light source 21 to always produce light regardless of normal monitoring or intrusion detection.

The sensor module 10 is a LiDAR sensor in the embodiment, but may emit radio waves to the monitoring region X and detect the radio waves returned after being reflected by one or more objects intruding into the monitoring region X. This contributes to the present invention as a radar sensor.

The sensor module 10 includes, for example, an emitter that emits an electromagnetic wave such as a millimeter wave or a microwave. A distance measuring method is, for example, FMCW, and an angle control method is, for example, MIMO, a phased array, or the like. In this case, the scanning means 12 may be a mechanical scanning method or an electronic scanning method, and specific examples of the electronic scanning method include a method of synthesizing signals of a plurality of reception antennas with phases changed with hardware or software.

In addition, the present invention is not limited to the embodiment, and it goes without saying that various modifications can be made without departing from the gist of the present invention.

### Industrial Applicability

According to the present invention, it is possible to reliably image an intruder into the monitoring region X regardless of a position of the intruder, without increasing the number of dark field light sources for enabling imaging in a dark field.

### Reference Signs List

- 100: monitoring device
- 10: sensor module
- 12: sensor scanning means
- 14: laser light mirror
- 15: rotation shaft
- 16: motor
- 20: camera module
- 21: dark field light source
- 22: imaging means
- 23: Imaging scanning means
- 24: illumination light mirror
- 25: rotation shaft
- 26: motor
- X: monitoring region

## Claims

1. A monitoring device comprising:
a sensor module configured to emit light or radio waves to a monitoring region that is preset and detect the light or the radio waves reflected and returned from the monitoring region, to detect one or more objects that has intruded into the monitoring region;
a camera module including a dark field light source that is for enabling imaging of the monitoring region in a dark field, and an imaging means configured to image the object irradiated with illumination light from the dark field light source; and
an imaging scanning means capable of scanning the illumination light along the monitoring region.

2. The monitoring device according to claim 1, wherein the illumination light from the dark field light source is scanned by the imaging scanning means, to be emitted only to a detection region that is a part of the monitoring region and in which one or more objects has been detected by the sensor module.

3. The monitoring device according to claim 1, wherein
the sensor module includes a sensor scanning means configured to scan laser light along the monitoring region, and
at least some components constituting the sensor scanning means are used also for the imaging scanning means.

4. The monitoring device according to claim 3, wherein
the sensor scanning means includes:
a laser light mirror configured to reflect the laser light;
a rotation shaft connected to the laser light mirror; and
a motor connected to the rotation shaft,
the imaging scanning means includes
an illumination light mirror configured to reflect the illumination light, and
the rotation shaft is connected to the illumination light mirror.

5. The monitoring device according to claim 3, wherein
the sensor scanning means includes:
a mirror configured to reflect the laser light;
a rotation shaft connected to the mirror; and
a motor connected to the rotation shaft, and
the mirror is a double-sided mirror that is also used for the imaging scanning means, and reflects the illumination light on a back surface of a reflection surface that reflects the laser light.

6. The monitoring device according to claim 1, wherein
the camera module includes a plurality of the dark field light sources, and
the imaging scanning means is capable of scanning the illumination light emitted from each of the plurality of dark field light sources along the monitoring region.

7. The monitoring device according to claim 1, wherein the illumination light emitted from the dark field light source is pulsed light.

8. The monitoring device according to claim 1, further comprising:
a visible light source configured to emit visible light to the monitoring region, wherein
the object detected by the sensor module is irradiated with the visible light from the visible light source.
